# EUROPEAN PATENT APPLICATION

(11) **EP 3 029 600 A1**
(43) Date of publication of application: **08.06.2016**
(21) Application number: 14195670.6
(22) Date of filing: 01.12.2014
(51) Int. Cl.: G06K 9/00, G06K 9/20, G06K 9/66, G06K 9/68

(54) **Thermal image object detection**

(71) Applicant: Axis AB, 223 69 Lund (SE)
(72) Inventor: Bengtsson, Jesper, 256 56 Helsingborg (SE); Johansson, Emanuel, 245 65 Hjärup (SE); Bylander, Mats, 247 32 Södra Sandby (SE); Winzell, Thomas, 247 97 Flying (SE)
(74) Representative: Awapatent AB

(57) **Abstract**

Shape detection is used in thermal images for detecting objects of one or more object classes. The temperature of a detected object is used to verify that the detection is correct, by determining if a temperature characteristic of a detected object is within a predetermined temperature interval of the relevant object class. Environmental conditions, such as rain, snow or fog, impacting the amount of thermal energy reaching a thermal camera from an object, are taken into account by collecting temperature statistics for the detected objects, and using these statistics to update the temperature interval.

## Description

### Technical field

The present invention relates to a method for object detection in thermal images.

### Background

Video monitoring is used in many different applications, both indoors and outdoors. A video monitoring installation can include a number of network cameras with different capabilities, such as cameras having fixed fields of view, PTZ cameras, cameras with wide-angle lenses etc.

Thermal cameras may be used to complement or replace visual video cameras in a video monitoring installation. The sensor in a thermal camera detects thermal radiation emitted from objects and people, and thermal cameras are therefore not disturbed by shades and changing lighting conditions in the way a visual camera could be. Hence, thermal cameras have many advantages, such as allowing detection of people, objects and incidents in complete darkness and difficult environmental conditions such as smoke, haze, dust and light fog.

Thermal cameras may e.g. be used for perimeter and area protection applications, and may be integrated with intelligent video applications, such as video motion detection and virtual tripwires, in order to automatically trigger actions such as sending alarms to an operator. Even though there are many examples of well-functioning integrations of thermal cameras in intelligent video applications, there is still room for improvement in this area.

### Summary of the invention

It is an object of the present invention to provide improved object detection in thermal cameras.

According to a first aspect of the invention, the above object is achieved by a method of analyzing a thermal image, comprising
detecting an object in the thermal image by finding an object shape corresponding to an object class,
determining a temperature characteristic of the detected object from the thermal image,
including the temperature characteristic of the detected object in temperature statistics of the object class,
accessing data specifying a predetermined temperature interval of the object class, the predetermined temperature interval of the object class being defined by
a default temperature of the object class,
a current temperature offset of the object class,
a default temperature interval width of the object class,
wherein a current midpoint of the temperature interval of the object class is defined by adding the current temperature offset of the object class to the default temperature of the object class,
wherein, if the temperature characteristic of the detected object is within the predetermined temperature interval for the object class, determining that the detected object is a verified object,
further comprising updating the predetermined temperature interval of the object class by changing the current temperature offset of the object class, based on the temperature statistics of the object class.

By considering both the shape of an object, and the temperature, in finding objects in a thermal image, a higher certainty that the object truly belongs to the object class is achieved. By updating the temperature interval based on temperature statistics for the detected objects, environmental conditions, such as fog, rain or snow, impacting the amount of thermal energy reaching the thermal camera, can be taken into account. No external data from sensors or similar needs to be added, instead all information is collected from the thermal images.

The step of accessing data specifying the predetermined temperature interval of the object class may further comprise
accessing data specifying a current low end interval width offset of the object class and a current high end interval width offset of the object class,
wherein a current width of the temperature interval of the object class is defined by adding the current high end and low end interval width offsets of the object class to the default temperature interval width of the object class, and
wherein updating the predetermined temperature interval of the object class further comprises changing the current high end or low end interval width offsets of the object class, based on the temperature statistics of the object class.

By changing the width of the interval based on the temperature statistics it is possible to take a large variance between observations into account. A situation where it would be beneficial to use a larger interval may e.g. be during a sunny day where temperatures on humans in a monitored scene may vary a lot due to factors such as clothes and the amount of time spent in the sun or in the shade.

The step of determining the temperature characteristic of the detected object may comprise determining at least one of the highest temperature of pixels within a predetermined region of the detected object, the lowest temperature of pixels within a predetermined region of the detected object, or a median or mean temperature of pixels within a predetermined region of the detected object.

All of these provide a simple and robust way of finding a temperature which is representative of a detected object.

The step of including the temperature characteristic of the detected object in temperature statistics of the object class may comprise including a correspondence weight factor in the temperature characteristic of the detected object, wherein the correspondence weight factor is based on a distance between the temperature characteristic of the detected object and the default temperature of the object class, such that the larger the distance, the lower the correspondence weight factor, and the smaller the distance, the higher the correspondence weight factor.

In this way the temperature characteristics of objects which are more likely to belong to the object class will be given a higher weight in the statistics and have more impact on the current temperature interval. In other words, the correspondence weight factor is an easy and efficient way of implementing a moderate approach in the updating of the temperature interval, which in most situations is advantageous. This since environmental conditions, such as changing weather, usually only affect the amount of thermal energy reaching the camera from an object to a limited extent.

The step of including the temperature characteristic of the detected object in temperature statistics of the object class may comprise determining a temperature difference between the temperature characteristic of the detected object and the default temperature of the object class, and only including the temperature characteristic in the temperature statistics of the object class if the temperature difference is below a predetermined difference threshold. In this way a "cut-off" temperature threshold is devised, which allows for discarding temperature characteristics belonging to a detected object which is most likely not a "true" object.

The step of including the temperature characteristic of the detected object in temperature statistics of the object class may comprise including an age weight factor in the temperature characteristic of the detected object, wherein the age weight factor is based on the amount of time that has passed since the temperature characteristic of the detected object was included in the temperature statistics of the object class, such that the older the object, the lower the age weight factor, and the younger the object, the higher the age weight factor. This is a convenient way of recognizing that since the offsets are aimed at compensating for various environmental conditions, usually weather related, they will, since weather changes, need to be based on fairly recent data in order to give a correct reflection of ambient conditions. As an example, a temperature offset which is relevant during a rain shower is not relevant an hour later when the sun is shining.

The age weight factor of the temperature characteristics included in the temperature statistics of the object class is advantageously repeatedly updated according to a present time, e.g. at predetermined time intervals. This makes it possible to update the temperature interval at times between the detection of new objects, since the temperature statistics will change over time when the age weight factors of the population of temperature characteristics included therein is updated.

In another embodiment, which may be seen as a variant of using an age weight factor, temperature characteristics of detected objects which are older than a predetermined threshold age are deleted from the temperature statistics of the object class. In case no new objects are detected, this will eventually lead to an empty set of statistics, and the offsets based on the statistics will be set to zero. This recognizes the fact that, if no new observations, which can give an indication on current environmental conditions, have been received in a while, the best guess for the temperature interval is should be based on the default temperature values for an object class.

The step of including the temperature characteristic of the detected object in the temperature statistics of the object class may comprise calculating a mean or median value of the temperature characteristic of the detected object and temperature characteristics of previously detected objects included in the temperature statistics of the object class. More advanced methods may also be used, such as calculating distributions of values using appropriate statistical methods, but calculating the mean or median is a simple and efficient choice.

The step of updating the predetermined temperature interval of the object class based on the temperature statistics of the object class may comprise assigning a value to the current temperature offset of the object class which is based on a difference between the calculated mean or median value and the default temperature. In other words, the midpoint of the temperature interval of the object class is set to the mean or median value of the temperature characteristics currently included in the temperature statistics.

Further, this value may be assigned to the offset only if the difference is larger than a predetermined minimum threshold value, in order to avoid too frequent updating of the temperature interval. In addition or as an alternative, this value may be assigned to the offset only if it is smaller than a predetermined maximum threshold, in order to avoid updating the temperature interval based on detected objects that most likely do not actually belong to the object class, since their temperature is too far from the default temperature.

A count weight factor may be included in the temperature statistics, wherein the count weight factor is based on a count of temperature characteristics currently included in the temperature statistics, such that the lower the count, the lower the count weight factor, and the higher the count, the higher the count weight factor. This means that it is possible to take into account if the statistics is based on many or few observations. It is usually reasonable to assume that statistics based on many observations is more accurate than statistics based on only a few observations.

The method may further comprise the step of determining a time interval between a verified object and a next detected object, and, if the time interval is larger than a time interval threshold, reducing a size of the current temperature offset of the object class, or setting the current temperature offset of the object class to zero, or enlarging the width of the temperature interval of the object class. By taking any of these actions, it is ensured that old observations do not influence the statistics too much when no new input regarding the environmental conditions potentially affecting the temperature measurements in the thermal image is available.

According to a second aspect of the invention, a video analytics unit for a thermal camera comprises
an object detector arranged to detect an object in a thermal image by finding an object shape corresponding to an object class,
a temperature determination unit arranged to determine a temperature characteristic of the detected object from the thermal image,
a temperature statistics unit arranged to include the temperature characteristic of the detected object in temperature statistics of the object class,
a data input arranged to receive data specifying a predetermined temperature interval of the object class, the predetermined temperature interval of the object class being defined by
a default temperature of the object class,
a current temperature offset of the object class,
a default temperature interval width of the object class, wherein a midpoint of the temperature interval of the object class is defined by adding the current temperature offset of the object class to the default temperature of the object class,
an object verification unit arranged determine if the temperature characteristic is within the predetermined temperature interval of the object class, and, if so, determine that the detected object is a verified object,
a temperature interval control unit arranged to update the predetermined temperature interval for the object class by changing the current temperature offset of the object class based on the temperature statistics of the object class.

The second aspect of the invention may generally have the same features and advantages as the first aspect. It is further noted that the invention relates to all possible combinations of features unless explicitly stated otherwise.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief Description of the Drawings

The invention will now be described in more detail by way of example and with reference to the accompanying schematic drawings, in which:
Fig. 1 shows a thermal image of a scene.
Fig. 2 shows a visual image of the same scene.
Fig. 3 illustrates objects in a thermal image.
Fig. 4 illustrates a method of analyzing thermal images.
Fig. 5 illustrates a video analytics unit for analyzing thermal images

### Detailed description of embodiments

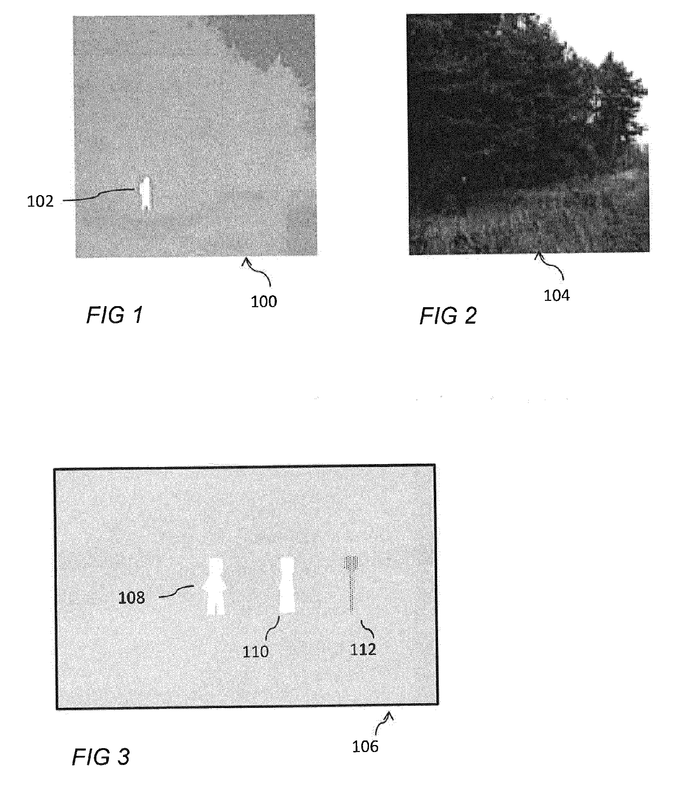

Fig. 1 shows an image 100 of a scene captured by a thermal camera. A person 102 is present in the image. Fig. 2 shows the same scene captured by a visual camera in a greyscale visual image 104. It is apparent that a detection of the person 102 is virtually impossible in the visual image 104. The thermal image 100 on the other hand gives a clear indication that an object having a different temperature than its environment is present in the scene. It may be noted that a thermal image usually does not contain any color information, meaning that any suitable color palette may be chosen by a user to visualize the output from the thermal sensor. The palette chosen in Fig. 1 is often denoted "white-hot" and generally speaking shows a warm area in white and a cool in black.

A thermal camera may be calibrated so that it is able give an absolute temperature of an area in an image. This means that a certain intensity of a pixel in the thermal image corresponds to a specific temperature. Calibrated thermal cameras are e.g. used in building construction applications, but may also be used in conjunction with intelligent video applications, such as to verify that a detected human-shaped object is actually a human and not another type of object, such as a vaguely human-shaped sign post on which sun light is reflected. The human would have a temperature of around 37°C, and the sign-post would normally not have that temperature, and it is therefore possible for the camera to determine the difference between them even if the shape is similar.

Fig. 3 shows a situation where a thermal camera able to measure absolute temperatures is useful. In Fig. 3 a thermal image 106 is schematically illustrated, in which three objects 108, 110 and 112 are present. Objects 108 and 110 are humans and object 112 is a sign post. Depending on the shape detector used, the object 112 might be mistaken for a person, since the shape is similar. However, as is symbolized by the pattern on object 112, the temperature of object 112 is different from that of object 108 and 118, and, thus, it is possible to conclude that object 112 is actually not a human, even though its shape is similar, and might be indicated by a shape detector to be a human.

However, as the inventors have realized, there are also situations where the absolute temperature of objects in a thermal image change due to environmental conditions, which may cause even analysis algorithms taking both the shape and the temperature of objects into account, to make misjudgments. The two most important environmental factors that affect the image of an object in a thermal camera are absorption and scattering. They both reduce the amount of thermal radiation that reaches the camera, thereby reducing the intensity of the object pixels.

Water vapor and carbon dioxide in the air are the primary causes of absorption. During absorption, heat radiated from objects is absorbed by water vapor and carbon dioxide and some of its energy is therefore lost before reaching the camera.

During scattering, thermal radiation from objects is dispersed when it hits particles in the air. The loss of radiation is directly related to the size and concentration of particles, droplets or crystals that constitute polluting, condensing or precipitating conditions such as smog, fog, rain or snow.

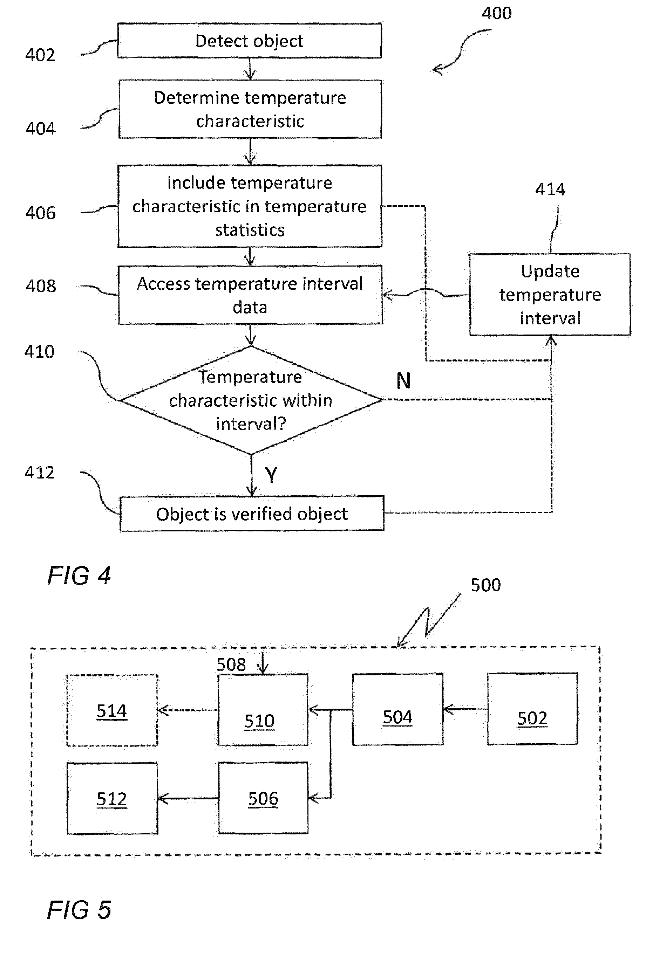

Both scattering and absorption has the effect that temperatures may be incorrectly measured in a thermal image, e.g. a human object may be perceived to have a substantially lower temperature than 37°C degrees. In order to counter this effect, a method 400 taking statistical data of measurements into account has been devised by the inventors. This method is schematically illustrated in Fig. 4.

A thermal camera, typically a network video camera used for monitoring or surveillance purposes, has captured images of a scene. To start with, the thermal images are analyzed in step 402 using some kind of intelligent shape detection algorithm, to detect object shapes for one or more classes of objects. This step may e.g. be performed by using a cascade of object classifiers within a Viola-Jones type detection framework, such as is described in the article by P. Viola and M. Jones "Rapid object detection using a boosted cascade of simple features", in proceeding of IEEE Computer Society Conference on Computer Vision and Pattern Recognition, 2001.

The objects that can be found by shape detection in a thermal image are naturally limited to those which have a temperature different to their environment. A common example is human beings, but other object classes such as different types of motor vehicles may also be possible to detect. When several different object classes are of interest, separate temperature intervals and statistics are obviously used for each object class.

When an object has been detected, a temperature characteristic of the object is determined in step 404. The temperature characteristic is determined from the intensity of one or more pixels in the thermal image, and includes one or more temperature values such as a mean, median, maximum or minimum temperature of all, or a subset of, pixels belonging to the detected object. The temperature characteristic may e.g. be a median value of the temperature of the pixels belonging to a face region of a detected person.

In step 406, the temperature characteristic of the detected object is included in temperature statistics of the relevant object class, e.g. the object class humans; in case the shape detecting algorithm deems that the detected object has a shape corresponding to a human.

In step 408, data regarding a predetermined temperature interval of the object class is accessed, and in step 410 it is determined if the temperature characteristic is within this interval. If that is the case, it is determined in step 412 that the detected object is a verified object, i.e. both the shape and the temperature indicates that the detected object actually is an object belonging to the particular object class. When a verified object is found, an event may be issued, in turn leading to one or more actions, such as an alarm to an operator, an entry in a log, or an updated object statistic, such as in a people counting application or similar.

The predetermined temperature interval is typically centered on a midpoint, which to start with is equal to a default temperature value of the particular object class, such as 37°C for the object class humans, and has an interval width, which to start with is a default width, such as ±5°C. The midpoint of the temperature interval is adjusted by adding an offset to the default temperature. The width of the interval may also be adjusted by adding offsets to the low end or the high end, or both, of the interval. The offsets are determined by evaluating the temperature statistics of the object class, more details on this is given further below.

In step 414, the temperature interval is updated based on the updated temperature statistics. It may be noted that the steps 408-412 on one hand and 414 on the other may take place in any order, i.e. the temperature interval may be updated before or after it is used to determine if the detected object is a verified object. This is illustrated by the dotted lines from steps 406, 410 and 412. The dotted line between step 406 and step 414 indicates that the temperature interval may be updated as soon as the temperature characteristic is included in the temperature statistic in step 406, and data for this updated temperature interval may be accessed in step 408, as is indicated by the line between step 414 and step 408. Alternatively, as is indicated by the dotted lines from steps 410 and 412, the temperature interval may be updated after it has been determined if the temperature characteristic of a detected object is within the temperature interval in step 410.

Going back to step 406, it may be noted that the inclusion of the temperature characteristic in the temperature statistics may be performed by adding the temperature characteristic to a collection of previously included temperature characteristics, such as by adding it to a table or a vector of temperature characteristics. The mean or median value of all the previously included temperature characteristics and the newly included temperature characteristics could then be determined.

Various conditions or weight factors can be applied to the temperature characteristic before, or after, including it in the temperature statistics. As a first option, a correspondence weight factor could be included in, or applied to, the temperature characteristic. The correspondence weight factor depends on the distance between the temperature characteristic and the default temperature of the object class. In other words, a detected object which has a temperature which is very different to the default temperature should not influence the statistics as much as a characteristic which is closer to the default temperature. This since it is more likely that the temperature of an object changes a little than a lot due to the above discussed environmental factors.

In a variant, a cut-off temperature distance could be used, meaning that if the distance between the temperature characteristic and the default temperature is too large, i.e. above a certain difference threshold, the temperature characteristic is discarded and not included at all in the temperature statistics. A detected object having a very different temperature is most likely not a "true" object and should not influence the statistics.

Another option is to take the age of temperature characteristics into account, in such a way that an older temperature characteristic included in the temperature statistics is given a smaller weight. Since environmental conditions mostly depend on the weather, which tend to change over time, older characteristics are probably less relevant. In other words, the temperature characteristic is weighted according to the difference between a current time point and the time when it was included in the temperature statistics.

The age weight factor is normally repeatedly updated according to the current time, meaning that, as time passes, the age weight factors will change for the temperature characteristics included in the statistics. In a variant, temperature characteristics that are older than a certain threshold age are deleted from the statistics. When using the age weight factor, a time stamp indicating when a temperature characteristic is added to the temperature statistic, is conveniently included in each temperature characteristic.

The temperature statistics could also include a count weight factor. In that way the count, i.e. total number, of temperature statistics included in the temperature statistics is taken into account. It may be assumed that if a higher number of objects have been detected and therefore a higher number of temperature characteristics is included in the temperature statistics, the temperature statistics give a more accurate view of the environmental conditions than if only a few temperature characteristics are available.

As mentioned above, in step 414, the temperature statistics are used to update the temperature interval by changing the temperature offset, which is added to the default temperature in order to define the midpoint of the temperature interval. Hence, changing the temperature offset will shift the temperature interval. Optionally, the upper and lower limits of the interval may also be changed by altering offset values for the low end and high end of the interval.

As one example, the mean or median value, optionally including the above discussed, or other weight factors, of the temperature characteristics included in the temperature statistics is calculated, and the difference between this mean or median value and the default temperature value is set as the temperature offset. In other words, when updating the temperature interval, the midpoint of the temperature interval is moved to the calculated mean or median value of the temperature characteristics currently included in the temperature statistics. As another example the offset may be set to a fraction of the difference between the mean or median value and the default temperature.

In some cases it might be more convenient not to move the temperature interval too often. Then it is possible to set the condition that this update should only be performed when the difference between the default temperature and the mean or median value is large enough, i.e. when the difference is larger than a predetermined minimum threshold value. It is also possible to use a maximum threshold value, i.e. to only update the temperature interval within certain limits, and refrain from updating the temperature interval when the difference is too large. This would avoid moving the temperature interval into a completely unlikely position, such as having a temperature interval which indicates that the object class "humans" would have a temperature of around 0°C.

As another example, the variance or standard deviation of the temperature characteristics currently included in the temperature statistics may be calculated and used to update the width of the temperature interval by changing the offsets to the low end and the high end thereof. If the variance is large, this may be an indication that the temperature interval needs to be enlarged in order to cover the temperature of all interesting objects. An example of a situation where it could be beneficial to use a larger interval, is during a sunny day where the temperatures on humans may vary a lot, due to factors such as the amount, type, fabric and color of their clothes and time spent in the sun or shade.

In case an age weight factor is used, the population of temperature characteristics included in the temperature statistics will change over time, and therefore the updating of the temperature interval may also need to take place when no new objects have been detected, such as at predetermined time intervals. As an example, if a cut-off age is used, and no new objects are detected, the temperature statistics will eventually contain no temperature characteristics at all. The offset(s) would then be set to zero, and the temperature interval return to the default settings. The default values are the best guess in case no observations are available, and therefore the best option is to return to those values in case no new detections are available.

In a variant, the time between a verified object and a next detected object is used to determine if the current offsets to the temperature interval are up to date and accurate. More in detail, when the time between a verified object and a next detected object exceeds a certain time interval threshold, one or more actions are taken, such as reducing the current temperature offset, or even setting it to zero, in order to move the current midpoint of the temperature interval closer to the default temperature. Another option is to expand the temperature interval, such as by adding offsets to one or more of the low end or the high end of the interval.

Fig. 5 illustrates a video analytics unit 500 for a thermal camera. The video analytics unit 500 is adapted to perform the herein discussed method.

The video analytics unit 500 comprises an object detector 502 which detects an object in a thermal image, captured by a thermal camera, by finding an object shape in the thermal image which corresponds to an object class. Typically, as mentioned above, a shape detecting algorithm using a cascade of classifiers may be used. The video analytics unit 500 further comprises a temperature determination unit 504 which determines a temperature characteristic, from the thermal image, of the object detected by the object detector 502. The determined temperature characteristic of the detected object is included in temperature statistics of the object class by a temperature statistics unit 506.

The video analytics unit 500 receives data specifying a predetermined temperature interval of the object class via a data input 508. This data is used by an object verification unit 510, which determines if the temperature characteristic of the detected object is within the predetermined temperature interval of the object class. If that is the case, the object verification unit 510 determines that the detected object is a verified object, in the sense that it both has a relevant shape and a relevant temperature for the object class. This information may optionally be used to generate an event in event generation unit 514, and this event can be sent on from the video analytics unit 500.

The video analytics unit 500 further comprises a temperature interval control unit 512 which uses the updated temperature statistics for the object class to update the predetermined temperature interval for the object class, or, in other words, update the data specifying the predetermined temperature interval.

In summary, shape detection is used in thermal images for detecting objects of one or more object classes. The temperature of a detected object is used to verify that the detection is correct, by determining if a temperature characteristic of a detected object is within a predetermined temperature interval of the relevant object class. Environmental conditions, such as rain, snow or fog, impacting the amount of thermal energy reaching a thermal camera from an object, are taken into account by collecting temperature statistics for the detected objects, and using these statistics to update the temperature interval.

## Claims

1. A method of analyzing thermal images, comprising
detecting (402) an object in a thermal image by finding an object shape corresponding to an object class,
determining (404) a temperature characteristic of the detected object from the thermal image,
including (406) the temperature characteristic of the detected object in temperature statistics of the object class,
accessing (408) data specifying a predetermined temperature interval of the object class, the predetermined temperature interval of the object class being defined by
a default temperature of the object class,
a current temperature offset of the object class,
a default temperature interval width of the object class,
wherein a current midpoint of the temperature interval of the object class is defined by adding the current temperature offset of the object class to the default temperature of the object class,
wherein, if the temperature characteristic of the detected object is within the predetermined temperature interval for the object class, determining (412) that the detected object is a verified object,
further comprising updating (414) the predetermined temperature interval of the object class by changing the current temperature offset of the object class, based on the temperature statistics of the object class.

2. The method of claim 1, wherein accessing data specifying the predetermined temperature interval of the object class further comprises
accessing data specifying a current low end interval width offset of the object class and a current high end interval width offset of the object class,
wherein a current width of the temperature interval of the object class is defined by adding the current high end and low end interval width offsets of the object class to the default temperature interval width of the object class, and
wherein updating the predetermined temperature interval of the object class further comprises changing the current high end or low end interval width offsets of the object class, based on the temperature statistics of the object class.

3. The method of claim 1 or 2, wherein determining the temperature characteristic of the detected object comprises determining at least one of:
the highest temperature of pixels within a predetermined region of the detected object,
the lowest temperature of pixels within a predetermined region of the detected object,
a median or mean temperature of pixels within a predetermined region of the detected object.

4. The method of any of the preceding claims, wherein including the temperature characteristic of the detected object in temperature statistics of the object class comprises
including a correspondence weight factor in the temperature characteristic of the detected object, wherein the correspondence weight factor is based on a distance between the temperature characteristic of the detected object and the default temperature of the object class, such that the larger the distance, the lower the correspondence weight factor, and the smaller the distance, the higher the correspondence weight factor.

5. The method of any of the preceding claims, wherein including the temperature characteristic of the detected object in temperature statistics of the object class comprises
determining a temperature difference between the temperature characteristic of the detected object and the default temperature of the object class, and only including the temperature characteristic in the temperature statistics of the object class if the temperature difference is below a predetermined difference threshold.

6. The method of any of the preceding claims, wherein including the temperature characteristic of the detected object in temperature statistics of the object class comprises
including an age weight factor in the temperature characteristic of the detected object, wherein the age weight factor is based on the amount of time that has passed since the temperature characteristic of the detected object was included in the temperature statistics of the object class, such that the older the object, the lower the age weight factor, and the younger the object, the higher the age weight factor.

7. The method of claim 6, further comprising repeatedly updating the age weight factor of the temperature characteristics included in the temperature statistics of the object class according to a present time.

8. The method of any of the preceding claims, further comprising deleting temperature characteristics of detected objects which are older than a predetermined threshold age from the temperature statistics of the object class.

9. The method of any of the preceding claims, wherein including the temperature characteristic of the detected object is in the temperature statistics of the object class comprises calculating a mean or median value of the temperature characteristic of the detected object and temperature characteristics of previously detected objects included in the temperature statistics of the object class.

10. The method of claim 9, wherein updating the predetermined temperature interval of the object class based on the temperature statistics of the object class comprises
assigning a value to the current temperature offset of the object class which is based on a difference between the calculated mean or median value and the default temperature.

11. The method of claim 10, wherein updating the predetermined temperature interval of the object class based on the temperature statistics of the object class comprises
assigning a value to the current temperature offset of the object class, which is based on a difference between the calculated mean or median value and the default temperature, only if the difference is larger than a predetermined minimum threshold value.

12. The method of claim 10 or 11, wherein updating the predetermined temperature interval of the object class based on the temperature statistics of the object class comprises
assigning a value to the current temperature offset of the object class, which is based on the difference between the calculated mean or median value and the default temperature, only if the difference is smaller than a predetermined maximum threshold value.

13. The method of any of the preceding claims, further comprising including a count weight factor in the temperature statistics, wherein the count weight factor is based on a count of temperature characteristics currently included in the temperature statistics, such that the lower the count, the lower the count weight factor, and the higher the count, the higher the count weight factor.

14. The method of any of the preceding claims, further comprising determining a time interval between a verified object and a next detected object, and, if the time interval is larger than a time interval threshold, reducing a size of the current temperature offset of the object class, or setting the current temperature offset of the object class to zero, or enlarging the width of the temperature interval of the object class.

15. A video analytics unit for a thermal camera, comprising
an object detector (502) arranged to detect an object in a thermal image by finding an object shape corresponding to an object class,
a temperature determination unit (504) arranged to determine a temperature characteristic of the detected object from the thermal image,
a temperature statistics unit (506) arranged to include the temperature characteristic of the detected object in temperature statistics of the object class,
a data input (508) arranged to receive data specifying a predetermined temperature interval of the object class, the predetermined temperature interval of the object class being defined by
a default temperature of the object class,
a current temperature offset of the object class,
a default temperature interval width of the object class,
wherein a midpoint of the temperature interval of the object class is defined by adding the current temperature offset of the object class to the default temperature of the object class,
an object verification unit (510) arranged to determine if the temperature characteristic is within the predetermined temperature interval of the object class, and, if so, determine that the detected object is a verified object,
a temperature interval control unit (512) arranged to update the predetermined temperature interval for the object class by changing the current temperature offset of the object class based on the temperature statistics of the object class.
